# EUROPEAN PATENT SPECIFICATION

(11) **EP 2 599 180 B1**
(45) Date of publication and mention of the grant of the patent: **08.10.2014**
(21) Application number: 10798722.4
(22) Date of filing: 27.07.2010
(51) Int. Cl.: H02H 9/08, H02J 3/26

(54) **THE APPARATUS COMPENSATING GROUND CURRENTS CONNECTED TO PHASE CONDUCTORS OF A DISTRIBUTION SYSTEM**
VORRICHTUNG ZUR KOMPENSATION EINES FEHLERSTROMES BEI EINEM ERDSCHLUSS VERBUNDEN MIT DEN PHASENLEITERN EINES VERTEILUNGSNETZES
DISPOSITIF DE COMPENSATION D'UN COURANT DE DÉFAUT À LA TERRE RELIÉ AUX CONDUCTEURS DE PHASE D'UN SYSTÈME DE DISTRIBUTION

(43) Date of publication of application: 05.06.2013
(73) Proprietor: Západoceská univerzita v Plzni, 30614 Plzen (CZ)
(72) Inventor: PEROUTKA, Zdenek, 312 00 Plzen (CZ); MATULJAK, Ivan, 370 11 Ceske Budejovice (CZ)
(74) Representative: Langrova, Irena
(86) International application number: PCT/CZ2010/000085
(87) International publication number: WO 2012/013166

(56) References cited:
- EP-A2- 1 855 366
- WINTER K M: "Swedish distribution networks-a new method for earthfault protection in cable- and overhead systems", DEVELOPMENTS IN POWER SYSTEM PROTECTION, 1993., FIFTH INTERNATIONAL CO NFERENCE ON YORK, UK, LONDON, UK,IEE, UK, 1 January 1993 (1993-01-01), pages 268-270, XP006514559, ISBN: 978-0-85296-559-7
- CHEN Z ET AL: "Grid interface options for variable-speed, permanent-magnet generators", IEE PROCEEDINGS: ELECTRIC POWER APPLICATIONS, INSTITUTION OF ELECTRICAL ENGINEERS, GB, vol. 145, no. 4, 10 July 1998 (1998-07-10) , pages 273-283, XP006011081, ISSN: 1350-2352, DOI: DOI:10.1049/IP-EPA:19981981

## Description

### Technical field

The invention concerns an apparatus connected to the phase conductors of a distribution system used for compensation of ground fault currents. It is aimed especially at the compensation of fault curents at the point where there is an accidental contact with ground in a distribution system.

### Background and summary of the invention

The current solution employs a continuously tunable neutral-earthing reactor connected in-between the transformer neutral point and earth potential to compensate for fault capacitive current while an accidental contact with ground (so-called ground fault) occurs. If the distribution system is insulated i.e. a transformer does not have the neutral point terminal and compensation of fault currents is required a device for creating the artificial neutral point must be used. It means using a so-called earthing transformer or Bauch's transformer with a tunable earthing reactor connected to the secondary winding of this transformer. This earthing reactor is tuned into resonance with the overall capacity of distribution system and it compensates for capacitive current of the distribution system while there is a ground fault. The compensations of the active (resistive) fault current are based on the principle of current injection into an auxiliary winding of the earting reactor. These systems are also called residual current compensators (RCC). One of the possible solutions for compensation of a residual current under single-phase-to-ground fault condition is presented in paper Winter, K. M., "Swedish distribution networks - A new method for earthfault protection in cable - and overhead systems", in FIFTH INTERNATIONAL CONFERENCE ON DEVELOPMENTS IN POWER SYSTEM PROTECTION, IEE, London, UK, 1 January 1993 (1993-01-01), pp. 268 - 270, XP006514559, ISBN: 978-0-85296-559-7. The apparatus consists of an arc suppression coil connected between transformer neutral point and the ground and a power electronics converter operated as the RCC which is connected in the auxiliary winding of the arc suppression coil. The major part of the ground fault current of fundamental frequency is eliminated using arc suppression coil. RCC is responsible for reduction or mitigation of the residual current which is composed of an uncompensated reactive fault current of fundamental frequency, active fault current as well as of higher harmonics of fault current. Known RCC requires measurement of the admittances at all feeders. This can be very complicated task especially in substations operating a huge number of feeders. The general disadvantage of these systems is their big power consumption that requires their own power supply (it usually requires connection of these systems to a substation self-consumption supply).

The compensation of phase non-symetry of the distribution system is done indirectly by inserting a damping resistor into an auxiliary winding of the earting reactor. It is important to highlight that the inserted resistor increases active component of the fault current if a ground fault (i.e. a contact of single phase with ground) occurs. The damping resistor is not constructed for permanent load during the contact of single phase with ground and therefore it must be disconnected. The compensation of the phase non-symmetry in the distribution system is also done directly by inserting a variable earthing inductance or capacitance in-between each phase of a power grid and the point of earth potential. By tuning the earthing reactances into resonance with each phase capacitive component the system compensates fault capacitive current. The compensation of the active current component is done in a fault state by appropriate tuning of the earthing reactances of phases that are not affected by the fault.

Over the past years, the so-called active filters, sometimes also called power conditioners, have been used widely for compensation of harmonics of a distribution system as well as for compensation of a reactive power. The active filter is connected in-between phases of the distribution system, yet it is not connected to the earth potential. This equipment cannot compensate for ground fault currents at the point of contact with the ground in the distribution system, nor compensate for phase non-symmetry in trouble-free state of the distribution system. Document EP 1 855 366 A2 discloses a filter determined for compensation of ground fault current during single-phase-to-earth/ground fault which is connected via at least three either manual or automatic switches between the phase conductors and the ground. The switches secure that during the ground fault the faulty phase is connected to the filter. The filter can be passive or active device (power converter). Described solution requires the arc suppression coil connected to the transformer neutral point or to an artificial neutral node. The passive filter is designed as a resonant (LC) circuit. The "active" filter is resolved as a power converter composed of a three voltage sources with controlled voltage magnitude and frequency. Drawback of the active filter in EP 1 855 366 A2 is that the apparatus control must identify in which phase the phase-to-ground fault occurred. Then the appropriate voltage source is connected via one of the switches to faulty phase. The compensating current is controlled in an indirect way, i.e. the controlled quantity of the converter is the output voltage.

The present methods and devices used for compensation of ground fault currents are usually based on the above-mentioned resonance methods. In fault (limit) states, this resonace principle (more exactly resonance) may cause very dangerous overvoltages and overcurrents in the distribution system. A serious disadvantage of the existing devices for compensation of ground fault currents is their inability to eliminate higher harmonics of fault currents. In case of ground fault, the first harmonic of the ground fault current is suppressed, however the higher harmonics of the ground fault current flow permanently through the point of contact with the ground, and they usually are not negligible. Other disadvantages of some of the present qualitatively equivalent solutions are their dimensions and weight, as well as their price in a wide power range.

The main objective of this invention is to create new equipment that will eradicate the disadvantages of the present solutions and at the same time to find as many functions as possible that could be performed by this new device.

A solution meeting the objective is an apparatus as defined in claim 1 for compensating ground fault currents that is connected to the phase conductors of a distribution system. It is based on the insertion of a controlled current source in-between the phase conductors of the distribution system and earth potential, firstly for compensation of ground fault currents and for compensation of higher harmonics at the point of ground fault, and also for eliminating the phase non-symmetry in trouble-free state of the distribution system, as well as for compensation of the higher harmonics of the distribution system and for compensation of the reactive power of the distribution system.

Main advantage of the invention consists in the fact that a controlled current source is continuosly tunable allowing to generate practically arbitrary curve of the currents, with a variable magnitude of the fundamental harmonic as well as higher harmonics, and also variable phase-shift for each harmonic component. Through compensating currents, the controlled current source has a direct countereffect on ground fault currents at the point of contact with the ground. A significant advantage of the invention is the possibility of compensation not only the fundamental harmonic of the fault current but also of its higher harmonics.

A controlled current source can be created by a multi-phase power electronics converter or it can be composed of single-phase power electronics converters.

A voltage source inverter can be used as the controlled current source. It can be directly connected at its ac side through input inductors to the phase conductors of the distribution system and to the earth potential. The voltage source inverter can be also connected to phase conductors of the distribution system through a converter transformer. The voltage source inverter must be completed by a current control loop of the current on its ac side.

A current source inverter can also be used as the controlled current source. It can be directly connected at its ac side through input inductors to phase conductors of the distribution system and to the earth potential. It is necessary to include capacitors at ac terminals of the current source inverter. A current source inverter can also be connected to phase conductors of the distribution system through a converter transformer Again, it is necessary to complete this connection with capacitors at the ac terminals of the current source inverter. The current source inverter must be completed by a current control loop of the current on its ac side.

A frequency converter can also be used as the controlled current source. An indirect frequency converter can be used for the desired functions of the invention, either with a voltage source inverter at its output or with a current source inverter at its output. The connection of the power converter to the phase conductors of the distribution system and to earth potential depends on the type of employed inverter. It is described above, including the closed control loop of the current. The input part of the frequency converter must be connected to the power suply, e.g. it can be connected through an input converter transformer to the substation self-consumption supply.

Considering the state of the art in power electronics technology, a controlled current source based on the voltage source inverter or an indirect frequency converter with a voltage source inverter seems to be the optimal solution.

It is evident that the account of the above-mentioned particular components constituting a controlled current source is not complete. Under certain conditions this task can be performed for example by an active voltage source rectifier, an active current source rectifier, a direct frequency converter or a matrix converter.

### Brief description of drawings

The invention is further explained in drawings. Fig. 1 shows a diagram of the circuitry of equipment based on the invention, Fig. 2 shows a vector diagram describing a method for the compensation of ground fault currents, Fig. 3 presents a vector diagram describing a compensation of phase non-symmetry during a trouble-free state of the distribution system.

### Description of the preferred embodiment

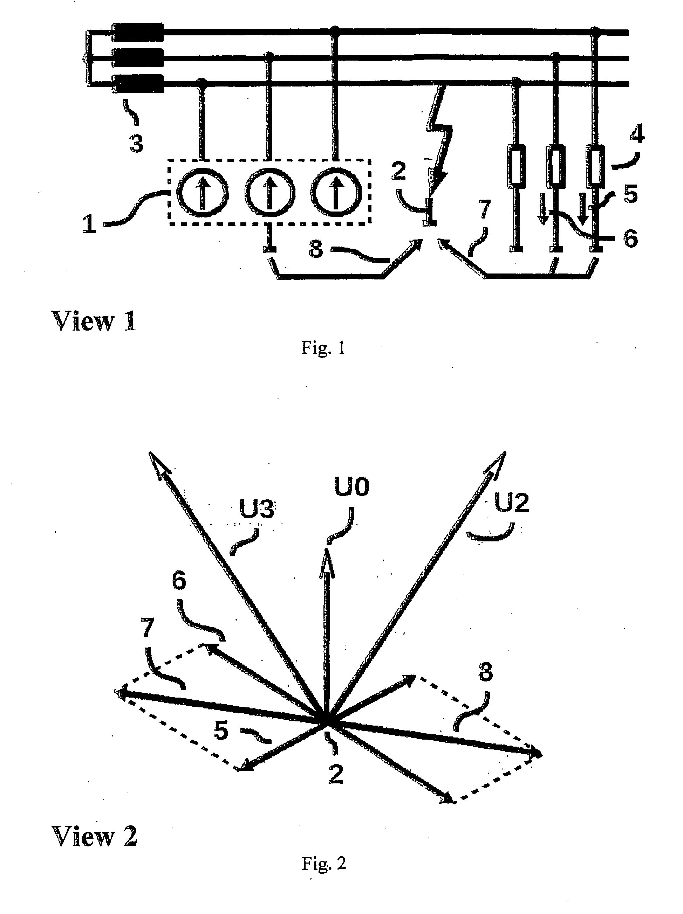

Fig. 1 presents a version of the invention with a controlled current source **1,** connected in-between each phase of the distribution system and the earth potential. We can see there impedances **4** of phase conductors of the distribution system against the earth potential and a transformer **3.** Fault currents flowing in a circuit during ground fault **2** are denoted **5, 6** and **7,** respectively.

A controlled current source **1** is created by using single-phase power electronics converters (in the following text also reffered as PEC). A controlled current source **1** can be also realized by using multi-phase power electronics converter. A controlled current source **1** can generate an arbitrary current curves of a variable magnitude of the fundamental harmonic as well as the higher harmonics, and also a variable phase shift for each harmonic component.

A fault current **7** is identified during a ground fault **2** occurring in one of the phases of the distribution system. The estimated current **7** serves as command for a current control loops of PEC. A current source **1** generates compensating current **8** of the same magnitude as fault current **7,** but with a reversed polarity. Current controllers ensure setting of the appropriate compensating current **8** thus eliminating the fault currents. A controlled current source **1** works similarly also in compensation of higher harmonics of fault currents eliminating particular harmonic components, such as the 5th, 7th, 11th and 13th harmonic. The explained effect is described in a vector diagram in Fig. 2.

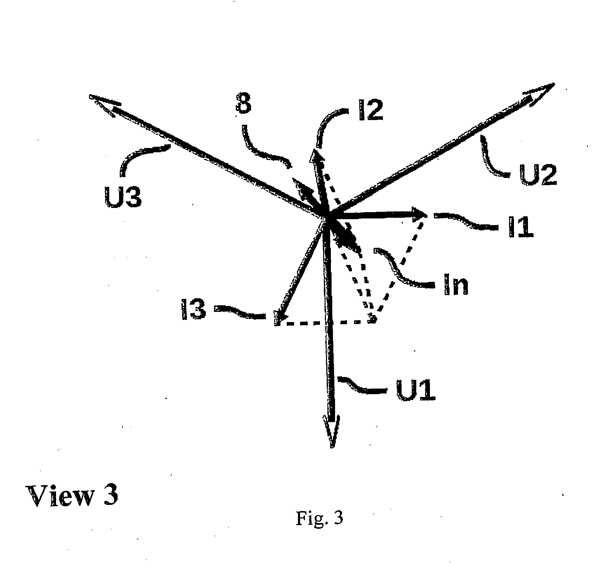

This invention makes it possible to compensate for a phase non-symmetry of the distribution system in trouble-free state. This is accomplished by setting the controlled current source **1** so as to compensate for the current causing phase non-symmetry in the distribution system. This effect is described in a vector diagram in Fig. 3.

In case of need, the connection according to Fig. 1 also allows compensation of harmonic currents as well as voltages of the distribution system, and also compensation of reactive power of the distribution system. Compensation of harmonics of the distribution system is achieved by appropriate setting of the controlled current source **1** so as to generate currents having a countereffect on certain components of the higher harmonics in the current of the grid. In case of requirement of the reactive power compensation the controlled current source **1** generates currents that compensate the reactive component of current of the distribution system. Thus it compensates the power factor of the system.

Voltage **U0** is in-between a transformer neutral point **3** and the earth potential (see the vector diagrams). **U0** can reach up to the level of the phase voltage (L-N) during ground faults. The phase voltages in phases that are not affected by ground fault can reach up to the level of the line to line voltages. **U1 ,U2, U3** are the phase voltages against the earth potential (see the vector diagrams). In a trouble-free state of the distribution system currents **I1, 12, I3** flow through the phase ground impedances into the earth. The current resulting from non-symmetry of the ground impedances is denoted **In.**

An advantage of the device according the invention is that it does not require a transformer neutral point. Thus it can be used in isolated power grids. Besides the above-mentioned functions, a very important quality of the device according to the invention is that it allows compensation of phase non-symmetry in trouble-free state of the distribution system. This is again achieved through a direct countereffect on the current that is causing phase non-symmetry in the distribution system. Furthermore, in case of need of compensation of harmonic currents and voltages of the distribution system as well as compensation of the reactive power of the distribution system, the apparatus according to the invention allows this compensation. The device according to the invention is markedly more variable compared to existing solutions that do not allow to perfom many of the functions of this device, especially compensation of higher harmonics of a fault current as well as compensation of harmonics and also of reactive power of the distribution system. The device according to the invention is markedly immune against non-symmetries and possible changes of circuit parameters. The great advantage of this solution compared to the existing ones is its robustness.

## Claims

1. An apparatus for compensating ground fault currents connected to phase conductors of a distribution system **characterized by that** it is a controlled current source (1) connected in-between phase conductors of the transformer (3) of the distribution system and the earth potential and is configured to compensate ground fault currents and higher harmonics of fault currents at the point of ground fault (2), further configured to compensate phase non-symmetry in trouble-free state of a distribution system, also configured to compensate higher harmonics of the distribution system and to compensate reactive power of the distribution system.

2. A device according to claim 1 **characterized by that** the controlled current source (1) is created by a voltage source inverter.

3. A device according to claim 1 **characterized by that** the controlled current source (1) is created by a current source inverter.

4. A device according to claim 1 **characterized by that** the controlled current source (1) is created by a frequency converter.

## Patentansprüche

1. Das zum Phasenleiter eines Verteilungssystems angekoppelte Gerät zur Kompensation der Störerdströme, **dadurch gekennzeichnet, dass** es aus einer geregelter Stromquelle (1) besteht, die zwischen Phasenleiter des Transformators (3) des Verteilungssystems und dem Erdpotential angeschaltet und so angeordnet ist, um die Störerdströme und höhere Harmonischen der Störströme im Punkte der Grundstörung (2) zu kompensieren, und auch so angeordnet, um die Phasenasymmetrie im störungsfreien Zustand des Verteilungssystems zu kompensieren und auch die höheren Harmonischen des Verteilungssystems und die Blindleistung des Verteilungssystems zu kompensieren.

2. Das Gerät dem Anspruch 1 zufolge, **dadurch gekennzeichnet, dass** die geregelte Stromquelle (1) durch einen Spannungsinverter gebildet ist.

3. Das Gerät dem Anspruch 1 zufolge, **dadurch gekennzeichnet, dass** die geregelte Stromquelle (1) durch einen Strominverter gebildet ist.

4. Das Gerät dem Anspruch 1 zufolge, **dadurch gekennzeichnet, dass** die geregelte Stromquelle (1) durch einen Frequenzumformer gebildet ist.

## Revendications

1. Un appareil, connecté aux conducteurs de phase d'un système de distribution, afin de compenser des courants de perturbation, **caractérisé en ce qu'il** consiste d'une source de courant commandée (1), connectée entre des conducteurs de phase d'un transformateur (3) du système de distribution et le potentiel de terre pour compenser les courants de perturbation de terre et des composants harmoniques elevées d'elles en point de la panne de terre (2) d'une part, pour compenser l'asymmetrie de phase en l'état fiable du système de distribution d'outre part, afin de compenser des composants harmoniques elevées du système de distribution et pour compenser la puissance réactive du système de distribution.

2. L'appareil selon le revendication 1, **caractérisé en ce que** la source de courant commandée (1) et composée d'un ondulateur de tension.

3. L'appareil selon le revendication 1, **caractérisé en ce que** la source de courant commandée (1) et composée d'un ondulateur de courant.

4. L'appareil selon le revendication 1, **caractérisé en ce que** la source de courant commandée (1) et composée d'un converteur de fréquence.
